# EUROPEAN PATENT SPECIFICATION

(11) **EP 1 718 048 B1**
(45) Date of publication and mention of the grant of the patent: **20.01.2010**
(21) Application number: 05009104.0
(22) Date of filing: 26.04.2005
(51) Int. Cl.: H04M 1/725, H04M 1/68, H04W 12/00

(54) **Secure communications system comprising a mobile encryption/decryption unit, a fixed communications unit and a clip-on module attachable to the mobile encryption/decryption unit**
Sicherheitsübertragungssystem mit einer Verschlüsselungs-/Entschlüsselungs-Einheit, einem ortsfesten Kommunikationsgerät, und einem auf die Verschlüsselungs-/Entschlüsselungs-Einheit aufsetzbaren Modul
Système de communications sécurisé comportant un dispositif portable de chiffrage/déchiffrage, une unité fixe de communication, et un module attachable au dispositif portable de chiffrage/déchiffrage

(43) Date of publication of application: 02.11.2006
(73) Proprietor: Sectra Communications AB, 583 30 Linköping (SE)
(72) Inventor: Hedström, Johan, 58598 Linköping (SE); Lindwall, Anna, 59041 Rimforsa (SE)
(74) Representative: Bokinge, Ole

(56) References cited:
- EP-A- 0 704 788
- EP-A- 0 818 937
- EP-A- 0 891 112
- WO-A-2004/017613
- US-A1- 2002 183 005

## Description

### Field of the invention

The present invention relates to a secure communications system comprising a detachable security module and a stationary communications unit. It further relates to a mobile encryption/decryption communications unit and a stationary unit for use in such a secure communications system. It also relates to a clip-on module for use with the mobile unit.

### Background

Secure communication of secrets has a long history, however, today with numerous types of different communications channels and advanced powerful equipments and methods for decryption and eavesdropping, secure communication using strong protection is more important than ever.

Secure telephone units providing strong encryption (top secret classification) exist in both stationary and mobile variants.

A stationary variant is the Secure Terminal Equipment (STE), which is an encrypted telephone communications system for wired communications. STE is designed to use ISDN telephone lines offering speeds of up to 128k bits per second. In addition to voice communication, the STE can also be utilized for data and fax transmission through a built-in RS-232 port. STE sets look like ordinary high-end office desk telephones and can place unsecured calls to anywhere on the public switched telephone network (PSTN). There is a PC Card slot in the STE that allows a Fortezza Plus (KOV-14) Crypto Card to be inserted. When a Crypto Card that has been properly configured is inserted, secure calls can be established between STE phones. All cryptographic algorithms are in the Fortezza Plus card, which is in the form of a PC Card. The Fortezza card stores private keys and other data needed for access of encrypted information. The Fortezza Plus (KOV-14) uses strong type 1 encryption and may be used for information classified up to top secret.

A mobile variant of a unit for telephone communication providing strong encryption is Tiger XS, which is a high-grade security mobile unit developed by the present Applicant. Tiger XS is designed to fulfil NATO requirements up to the security level top secret. The unit is provided with a headset for voice communication (clear data), an USB connector for communicating clear data with a laptop or PDA and yet another connector for serial communication of encrypted data (black data) to/from an external access point such as a radio communications unit.

However, even though such known systems enable an adequate security level, there are still problems not addressed by these prior art solutions.

Before introducing a new encryption system in a company, government or any other organisation, certification of the encryption hardware takes place. Typically, the stronger the encryption, the more rigorous certification process is required. Such certification involves testing and formal analysis of cryptographic security, functional security, emissions security and security of the product manufacturing and distribution process. The process is both time consuming and expensive. Every new type of cryptographic equipment must undergo the testing. The delay and expenses related to introducing new cryptographic equipment are factors that delimits and restricts use of encrypted information exchange to a few types of communications equipments and networks/channels, for example voice communication using a stationary phone connected to a PSTN system as is the case for the STE. A practical consequence of the delimited and restricted use is a decreased security level.

A user is sometimes positioned in a stationary office environment using conventional office devices for communication such as stationary telephones, fax and having stationary access to wired networks and communications channels such as for example a PSTN. At other occasions the same user may be traveling, using a mobile phone and a laptop having access to wireless networks and communications channels, for example GSM, UMTS, WLAN etc. Equipment for insecure communication, both stationary and mobile, using a conventional communications channel or network is typically well known to the user, for example faxes or standard PSTN telephone sets in the stationary office environment, and a conventional mobile phone in the mobile environment. However, if a more comprehensive secure communication policy is introduced, requiring secure communication over various communications channels, both in the office environment and on the move, the user must in addition to the insecure conventional communications devices learn how to use various kind of encryption devices and how to switch between these. For example the user must make sure that the various units have the correct encryption keys, access information and address information to users that are available for secure communication, how to activate encryption etc. Further, even when a single encryption device is used, the use of encryption is often associated with difficulties and complicated technical maneuvers, e.g. activating encryption, selecting the correct encryption keys, connecting the encryption device to the available communications channel, finding a user and establishing a connection, etc.

A majority of people in need of secure communication have no interest of using a variety of devices and being burdened with the aforementioned difficulties. Instead they simply want to communicate in a secure way with a minimum of effort. Thus, many people present a reluctant attitude to using secure communication, especially when secure communication is required over more than one communications channel and using multiple devices. Consequently, the resulting security level is in practice heavily dependent on the attitude of the users, and the practical security level is more often than not significantly lower than what is theoretically obtainable.

US 20020183005A1 discloses a portable device and a codeless telephone connected via Bluetooth. The portable device converts voice signals using a voice codec and an encryption module and transmits the encrypted signal to the codeless telephone which transmits the signal further to a counterpart codeless telephone via a network.

### Summary of the invention

An objective of the present invention is to overcome or at least alleviate the problems in the prior art. A specific object is to provide a communications system that more easily is accepted by a user, reducing discomfort and difficulties when switching from clear, insecure communication using a conventional communication channel to secure communication using the same channel. Another specific object is to provide a communications system that more easily is accepted by a user, reducing discomfort and difficulties when switching between secure communication in a stationary environment and in a mobile environment. Another specific object is to minimize the need for expensive and time-consuming certification procedures. Yet another specific object is decrease the need for a user to learn how to use different devices for encryption in different user environments, such as in an office environment with stationary access points to communications channels or networks, or on the move using wireless communications channels or networks, and/or for different types of data being communicated, such as fax data, voice data etc.

The invention is defined by the appended independent claims. Preferred embodiments are set forth in the dependent claims and in the following description and drawings.

In the context of this application, a "stationary unit" is a unit that is designed for use in a fixed environment, wherein the environment refers to the immediate surroundings of the unit. For example, a unit being designed for fixed use in a vehicle is a stationary unit, even if the vehicle moves.

"Clear data" corresponds to "red data", and includes all type of insecure and unencrypted data, both digital and analogue.

"Access point" is a gateway or entry passage adapted for transferring data communication to a predetermined communications channel or network.

"Encryption" relates to any method using cryptography with encryption/decryption keys to ensure that only predetermined or authorized users are able to decrypt encrypted data.

A detachable security module with its own user interface and that can be used as a stand alone mobile unit, provides a user with a single encryption device that can be used both in a stationary environment, such as in an office, and in a mobile environment. Hereby, the expenses for certification procedures can be limited to certification of a single encryption device instead of two, one for each environment. Furthermore, since the unit can be used as a stand alone unit, a user can directly use it when moving from a stationary environment to a mobile environment, simply by detaching the unit from the stationary unit and start using it for mobile communication by interacting via its user interface, which is the same, and thus familiar, in both environments. For example, a single unit, i.e. the mobile unit, that may comprise keys for encryption/decryption and contact information for establishing secure communication , is available and used independently on the environment where secure communication is taking place. Thus, the present solution provides a combination of cost efficiency, high security and convenience of use.

### Brief description of the drawings

For exemplifying purposes, embodiments of the present invention will now be described with reference to the appended drawings, wherein:
Fig. 1 is a schematic perspective view over a secure communications system comprising a mobile unit and a stationary unit.
Fig. 2 is a schematic view over interfaces of the mobile unit and the stationary unit in the in the secure communications system.
Fig. 3a is a schematic view over a multipurpose connector with functional grouping of pins.
Fig. 3b is a schematic view over a multipurpose connector being the counterpart to the multipurpose connector of fig. 3a.
Fig. 4a is a schematic view of functional blocks and interfaces of the mobile unit.
Fig. 4b is a schematic view of functional blocks and interfaces of the stationary unit.
Fig. 5 is a schematic perspective view over a secure communications system comprising the mobile unit, the stationary unit and a clip-on module.
Fig. 6 is a schematic view of functional blocks and interfaces of the clip-on module.

### Description of embodiments

The invention will now be described with reference to embodiments.

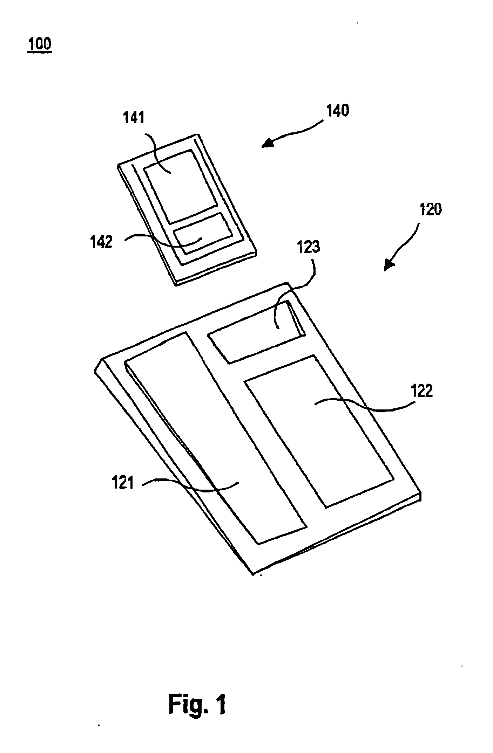

Fig. 1 shows an overview of a secure communications system 100 comprising a mobile encryption/decryption communications unit 140, supporting communication classified as top secret, and a stationary unit 120 for office use. A more detailed description of the exact type of encryption used is not relevant for the invention, and since many such encryption methods are per se previously known this will not be discussed further. The stationary unit has the appearance of an ordinary office telephone, i.e. a desktop telephone, and is equipped with a handset 121 and a keypad 122. This facilitates switching from ordinary insecure communication to secure communication. The stationary unit 120 is provided with a slot 123 fitting the mobile unit 140.

The mobile unit 140 has a user interface comprising a display 141 and a keypad 142. The slot 123 has a multipurpose multi-pin connector 128 (not shown in fig. 1), which connects to a corresponding connector 143 (not shown in fig. 1) on the mobile unit 140. The mobile unit 140 is connected to the stationary unit 120 by placing it in the slot 123, resulting in that the connectors 124,143 (not shown in fig. 1) are brought in contact and the stationary unit 120 is automatically enabled for secure communication, e.g. over a PSTN connected to the stationary unit 120When the units 120, 140 of the system are connected, the stationary unit 120 interacts with a user via the keypad 122 of the stationary unit, the handset 121 and the display 141 of the mobile unit. For example, a user may use the keypad to select a person or number to communicate with by selecting from a list showing in the display of the mobile unit 140, i.e. a user is presented with the same graphical user interface as when using the mobile unit detached from the stationary unit 120, i.e. as a stand alone communications unit, for example by placing calls by using the display 141 and the keypad 142 of the mobile unit. Once the user has learned and is familiar with the user interface of the mobile unit 120, as presented by using the display 141, it becomes very easy for a user to communicate securely independent on the environment and which communication channels that are used. The same user interface is presented to the user in all cases.

When a connection has been established between the units 120, 140, external red data (clear data) is input to the stationary unit by the user directly via the handset 121 or indirectly via an external device such as a fax or a computer.

The input red data is delivered by the stationary unit 120 to the mobile unit 140 that encrypts the data and output it back as black data (encrypted data) to the stationary unit 120. The black data is modulated by the stationary unit 120 and is output to a telephone interface 130 (not shown in fig. 1).

The telephone interface is connected to the PSTN, and the person with whom the communication is established is, indirectly or directly, connected to this network as well. For example, one of the users may be using a mobile unit 120 stand alone in a mobile environment with connection to e.g. a GSM network, while the other is using the mobile connected to the stationary unit 120 with connection to a PSTN. The GSM network and the PSTN has connections, i.e. it is possible to places calls between the networks, thus the users are indirectly connected to each network, respectively.

Input black data, i.e. encrypted data from the user with whom the secure communication is established, is received via the telephone line interface 130 (not shown in fig. 1), demodulated and passed to the mobile unit 140 for decryption. The decrypted black data is then delivered back to the stationary 120 unit as red data and delivered to the user e.g. via the handset 121, in case of voice communication, or to a connected fax via a red fax data interface 124, 125(not shown in fig. 1), in case of fax communication.

By using the system 100, a user may use the same encryption/decryption device for various types of secure communication (e.g. voice over PSTN, fax over PSTN, voice over GSM etc) and the user only has to learn how to handle a single user interface, i.e. the GUI presented to the user on the display 141. For security reasons it may be advantageous to couple a certain encryption/decryption device to a certain user, which is facilitated by the system 100 for which a user preferably is responsible and associated with a specific mobile unit 140. This is also advantageous on a practical level since a user may want to store contact information and information on encryption/decryption keys in the mobile unit 100 to be able to efficiently establish secure communication.

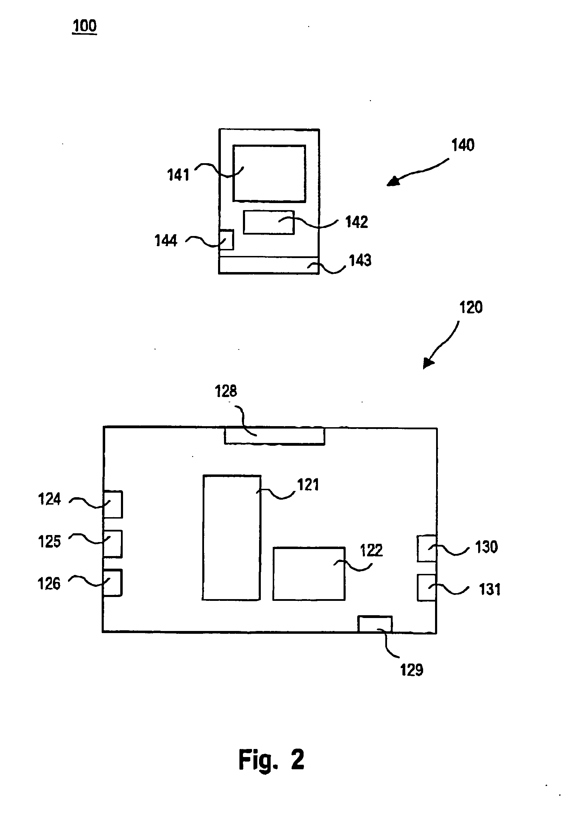

Referring now to the schematic drawings of fig. 2, the external interfaces of the devices 120, 140 in the system 100 will be described in some detail.

For input/output of red data between the stationary unit 120 and a user-controlled device such as for example a fax, the unit 120 is provided with an analogue fax interface 124, typically represented by a standard RJ-11 socket. For red data input/output the unit is also provided with a digital fax interface 125 in the form of a synchronous serial port represented by a DSUB25 connector. Often high security fax machines, shielded not to radiate secrete information during fax transmissions, are provided with digital fax interfaces. Further, the stationary unit 120 is provided with a red data interface being a USB connector for connecting the stationary unit 120 to a PC. Other types of connectors such as Firewire, RS-232 or similar ports may be used in other embodiments. Optical interfaces may also be used.

In another embodiment, the stationary unit 120 may comprise a computer network interface, for example a network card for Ethernet connection, and be associated with a unique IP address in a LAN or intranet.

The stationary unit 120 of fig.2 is also provided with a handset 121 equipped with microphone (not shown) and loudspeakers (not shown) for input/output of red analogue voice data.

Voice communication, fax communication and text-based communication via a computer, are the predominant conventional ways of communicating to/from an office environment. Hence, it is of great interest to support these with strong encryption, as is the case of the stationary unit 120 of the system 100.

For input/output of black data between the stationary unit 120 and an access point, the unit 120 is provided with a line interface 130 being a RJ-11 connector. The access point connected to the line interface 130 is typically a conventional telephone network (PSTN). The unit 120 is also provided with a black data serial interface represented by a RS-232 connector which allows the stationary unit to communicate via alternative communication channels or networks, for example by connecting the black data interface 130 to an external modem and/or equipment that allows black data to be transmitted using an alternative access point. In other embodiments, supported access points include private mobile radio (PMR), such as TETRA or Tetrapol and satellite telephony, such as Iridium, Inmarsat, Thuraya or Aces.

In another embodiment, the stationary unit 120 is furnished with a black data network interface being a connector to an Ethernet, allowing secure communication over IP networks, i.e. typically the Internet or an intranet. In such an embodiment, typically the unit also is provided with a red data network interface. In that case, the stationary terminal preferably is equipped with software and/or hardware supporting red data input to the stationary unit via a red data network interface and software/hardware that packetizes and sends black data as IP-packets, for example supporting IP-telephony, email or some other type of conventional messaging service in a computer network environment.

For control of the system 100 when the stationary unit 120 has the mobile unit connected, the stationary unit 120 is equipped with a keypad 122, similar to that of an ordinary telephone unit. Feedback on input via the keypad is presented to the user using a graphical user interface presented on the display 141. The keypad 122 may comprise a joystick or other means for navigating in the GUI shown on the display 141. The stationary unit also has a power supply connector 129. A mobile unit 140 connects to the stationary unit through the multipurpose multi-pin connector 128. When the mobile unit is connected to stationary unit 140, the stationary unit is activated automatically and is providing a user with secure communication using the communication types and communications channels supported by the stationary unit, e.g. secure voice data over PSTN, secure fax data over PSTN or ISDN etc.

The mobile unit 140 is provided with a multipurpose multi-pin connector 143 at its bottom, fitting the multipurpose multi-pin connector 128 of the stationary unit 120. The units 120, 140 are connected via the connectors 128, 143, typically by placing mobile unit in the slot 123.

The multipurpose connectors 128, 143 are used for transmission of both red and black data between the stationary unit and the mobile unit, including red voice data, red control data signals and red fax data. It is also used for supplying the mobile unit with power.

Further, the mobile unit 140 is equipped with a display 142 that is used both when the mobile unit 120 is positioned in the stationary unit 140 and when the mobile unit 120 is used as a stand-alone mobile encryption/decryption unit. The keypad 122 of the mobile unit 120 is only used when the mobile unit 120 is detached from the stationary unit 140. The mobile unit 120 also comprises a headset connector 144 for connecting a headset to provide the mobile unit with red in/out analogue voice data signals. The headset connector 144 is only used in cases when the unit is separated from the stationary unit. Another interface present on the mobile unit is a red data interface (not shown) represented by a USB port, similar to the red data interface 126 on the stationary unit, but used when the mobile unit is detached from the stationary unit.

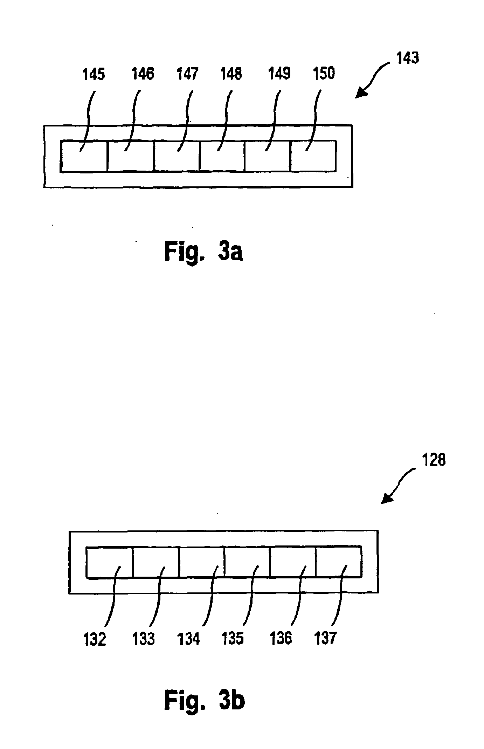

Fig. 3a and 3b schematically shows functional sets of pins supported by the multipurpose multi-pin connector 143 of the mobile unit and the counterpart multipurpose multi-pin connector 128 of the stationary unit, respectively. The connectors comprises red data input/output pins 145, 132, black data input/output pins 150, 137, red control data input/output pins 148,135, a red analogue voice data input/output pin set 146, 133, red fax data input/output pins 147, 134 and a power supply pin set 149, 136. The power supply pin set is for delivering power from the stationary unit to the mobile unit, and, for example, to charge a battery in the mobile unit. The red data pins 145, 132 are for digital data supplied to the stationary unit by e.g. by a PC via the red data interface 126 of the stationary unit 120.

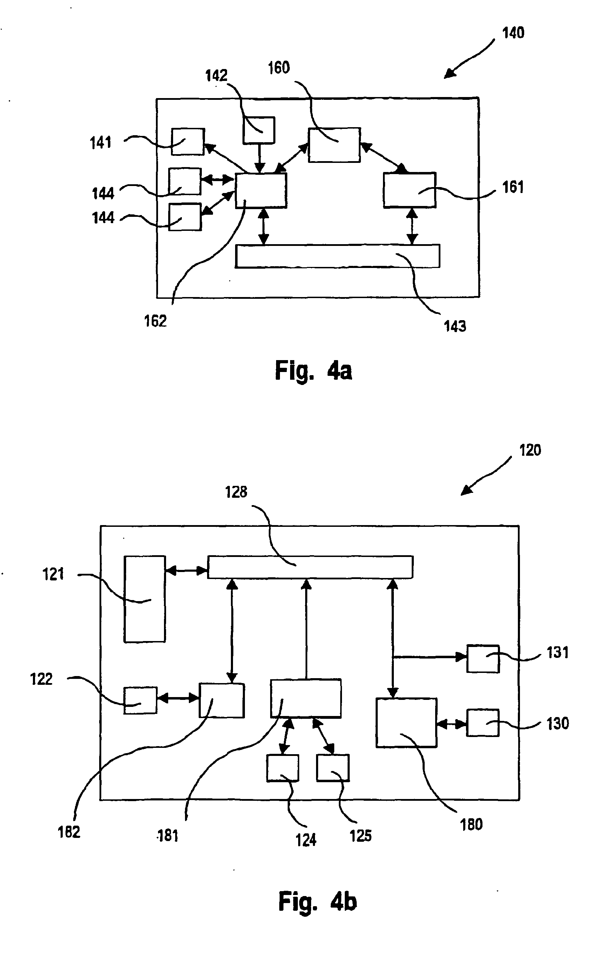

Fig. 4a schematically shows functional blocks of the unit 120 and their relation in terms of signalling illustrated by arrows.

The red processing block 162 processes all types of red data, i.e. input red data or decrypted black data. The red processing block 162 e.g. takes care of audio digitalisation and voice coding, converting the red analogue voice data into a format that can be encrypted by the encryption/decryption block 160.

The red processing block 162 is also responsible for reacting and taking action upon user interaction via the keypad 142, or based on control data coming via the multipurpose connector from the stationary unit. The red data processing block 162 also handles the graphical user interface (GUI) presenting information to a user via the display 141.

The GUI is available to a user through the display both when the mobile unit is detached from the stationary unit and when it is connected to the unit, i.e. the user is always presented a same and familiar GUI independent on where secure communication is taking place and on what type of secure communication that is used. Functions that are supported by the red processing block 162 and presented to a user through the GUI includes phone book function, key management and generation of secure text messages, similar to SMS on a mobile phone, the text messages being encrypted/decrypted by the encryption/decryption block 160. Part of the key management, i.e. management of keys required for decryption and encryption, may be combined with the phone book functionality. That way the corrects keys are coupled to the correct persons or groups, similar to coupling address information and phone numbers to persons or groups, which makes it very easy for a user to establish secure communication.

When the mobile unit is connected to the stationary unit 120, the red processing block 162 will only accept voice data and user interaction via the stationary unit 120, available via the multipurpose connector 143 in the form of red voice data and red control data signals.

On the opposite side of the encryption/decryption block 160, there is a black processing block 180 responsible e.g. to make sure that black data is communicated as serial data using AT-commands.

In alternative embodiments other types of communication protocols may be used. Typically there is a default black data communication protocol which is the same for all compatible mobile units 140 and stationary units 120 but additionally also other black data communications protocols may be supported, which are used when communication is established using certain types of access points. For example, the black data processing block may communicate black data via an internal Bluetooth interface (not shown) to nearby equipment such as a mobile phone acting as an access point to a GSM network or similar. This is typically the case when the mobile unit is detached from the stationary unit and used as a stand-alone mobile communications unit. In other embodiments the black data processing block may communicate data using other types of wireless access point interfaces, such as a WLAN or DECT interface.

In another embodiment the black data processing block may comprise a wireless access point, for example providing access to a GSM, UMTS or GPRS enabled network. The distinction "wireless access point" and "wireless access point interface" is made to point out that in the former case, the wireless communication is for reaching an access point, typically located in the near surroundings of the mobile unit, and which provides access to a communications channel or network to which the recipient of the black data has connection to.

When the mobile unit is connected to the stationary unit 120, or to a mobile access point via a multipurpose connector 128, the black data is instead communicated "by wire", i.e. in this case through the physical connection established by the connectors 128, 143 brought in contact, i.e. the black data communication is taking place over a physically connected access point interface. In an alternative embodiment the mobile unit 120 may be provided with a separate black data input/output interface, e.g. in the form of a serial RS-232 interface similar to the interface 131 for black data on the stationary unit 120. The separate black data input/output interface on the mobile unit may be used as a wired access point interface when the mobile unit 140 is used being detached from the stationary unit 140.

Black data being received by the mobile unit 140 is handled by the black data processing block 181 and is then delivered to the decryption/encryption block 160 for decryption.

After decryption, the decrypted, thus red, data is forwarded to the red processing block 162. Depending on the type of communication established, the red data is adjusted to comply with the relevant communication type; for example, red voice data will be processed into a voice signal and forwarded to either the handset interface 144 or to the red voice data pins of the multipurpose connector. The latter in case the mobile unit 140 is connected to the stationary unit 120. In cases other than voice communication, the red data received by the red processing unit 162 from the encryption/decryption device 160 is forwarded to the red data or red fax data pins of the multipurpose connector, when the mobile unit is connected to the stationary unit 120, or to the red data interface 164, when the mobile unit is detached.

Fig. 4b schematically shows functional blocks of the stationary unit 140 and their relation in terms of signalling illustrated by arrows.

External data in the form of red voice data is input via the handset 121 and forwarded to the voice data pin set 133 of the multipurpose connector 128.

In case of fax communication, input of red fax data is delivered either via the analogue fax interface 124 or the digital fax interface 125 to a fax interface converter 181, which basically is responsible to convert the fax data into a red data format that later can be encrypted. The converted fax data is delivered to the fax data pin-set 134 of the multipurpose connector 128.

A user that interacts and controls the stationary unit is using the keypad 122, and the signals generated are handled by a Man Machine Interface (MMI) block 182 converting the signals into red data control signals that are forwarded to the red control pins 135 of the multipurpose connector. Feedback on user actions is made via the display 141 of a mobile unit that is connected to the stationary unit 120, however, some basic feedback may also be done using LED indicators (not shown) on the stationary unit 120, but at least all types of more comprehensive interaction relating to encryption/decryption should preferably take place using the GUI showed on the display 141 of the mobile unit 140.

Black data that are received from the black data pins 137 of the multipurpose connector 128 is delivered to the black data serial interface 131 or to an internal modem 180. The modem is PSTN modem or an ISDN modem. The modulated black data is then delivered to the line interface 130. Black data being received via the line interface 130 is demodulated by the modem block 180 and then delivered to the black-data pins of the multipurpose connector 128. Black serial data that is received from the black data serial interface 131 is delivered to the multipurpose connector 128 as well.

In an alternative embodiment there is a functional block for converting black data into IP traffic, for example voice-over-IP in the case of black voice data. The same block would also convert received IP data into the black data format used internally by the stationary unit. The black IP data would typically be communicated over a computer network interface to an access point being the Internet or a LAN such as an intranet.

In an alternative embodiment there is a functional block responsible for converting between an internal red data format of the stationary unit and IP-data. The red IP-data is communicated externally via a red computer network interface and internally via the red data pins of the multipurpose connector. In case a user interacts with the stationary unit via the red computer network interface, the converted IP-data is forwarded as red control signals to the red control pins of the multipurpose connector.

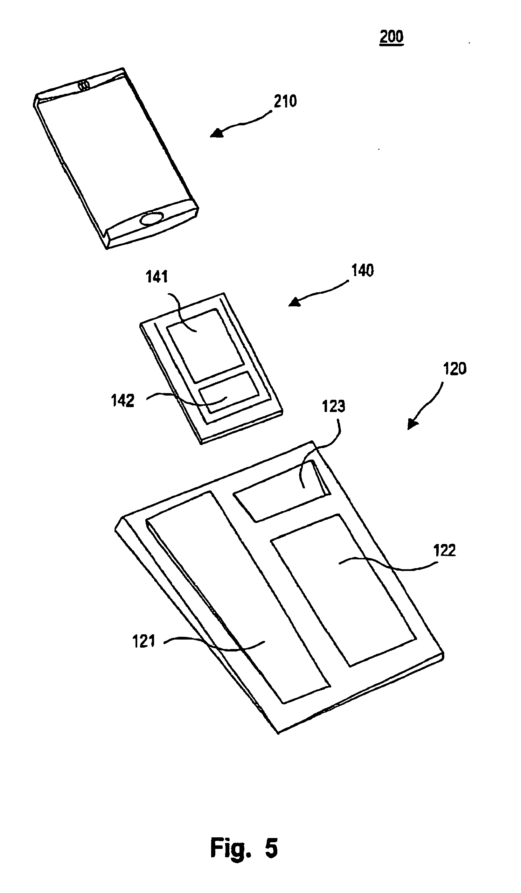

Fig. 5 shows an overview of a secure communications system 200 comprising a mobile encryption/decryption communications unit 140., a stationary unit 120 e.g. for office use, and a clip-on unit 200 adapted to fit the mobile unit 140. The clip-on unit 210 is used to provide the mobile unit with communication means when it is used as a stand-alone unit, i.e. detached from the stationary unit 120.

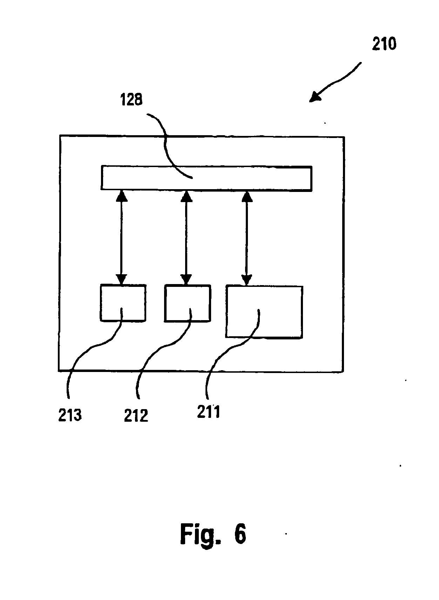

Fig. 6 is showing a schematic view over interfaces and functional block of the clip-on module 210, with arrows indicating signalling. The module 212 comprises a multipurpose connector 128, i.e. the same type of connector that is used in the stationary unit 120 and that previously was described in some detail with reference to fig. 3b. The clip-on module further comprises a loudspeaker 213 and a microphone 212, which provides a mobile unit 140 with means for input/output of red analogue voice data from/to an user, i.e. when using the clip-on module the mobile unit may be used as when using an ordinary mobile phone without a headset.

In an alternative embodiment the clip-on module 210 is providing the mobile unit 140 with a keyboard (not shown), e.g. for direct input of clear data to the mobile unit 140.

The clip-on module 210 also comprises means for wireless communication 211 over GSM, i.e. the clip-on module 210 comprises a wireless access point 211. It is advantageous to provide the mobile unit with a wireless access point 211 through the clip-on unit, rather then having a built in wireless access point in the mobile unit 140. There may be various clip-on modules 210 providing access point to different wireless communications channels or networks, such as for example to GSM or UMTS networks, making it very convenient to use the mobile unit 140 and switch between different types of mobile communications channels or networks. It is simply a matter of changing clip-on module. In case a mobile unit has a built in wireless access point, or wireless access point interface, the connection of a clip-on module 210 providing wireless access takes precedence. In such a case a clip-on module 210 may be used as a supplementary wireless access point or wireless access point interface.

In an alternative embodiment, the clip-on module 210 comprises means for video communication, e.g. a camera. This may be suitable when a clip-on module 210 supports UMTS, or any other type of communications networks or channels that supports video calls. The video data from the camera is typically converted to red data before being passed to the mobile unit 140 using the multipurpose connector 128 of the clip-on module 210.

Specific embodiments of the invention have now been described. However, several alternatives are possible, as would be apparent for someone skilled in the art, and some of which have been indicated in the foregoing. Such and other obvious modifications must be considered to be within the scope of the present invention, as it is defined by the appended claims.

## Claims

1. A security module (140) detachable from a stationary communications unit (120), said security module comprising
encryption means (160) for encrypting and decrypting data;
data communication means (143) adapted for receiving encrypted data and delivering decrypted data, and/or receiving clear data and delivering encrypted data from/to the stationary communications unit (120);
a user interface (141); and
an access point interface (143) adapted for connecting the security module (140) to an external communications channel or network;
the security module (140) being usable both as a stand-alone secure mobile communications unit (140) when detached from the stationary communications unit (120) and as a security module (140) for encryption/decryption when connected to the stationary communications unit (120), said stationary communications unit (120) being provided with a clear data interface (121, 122, 124, 125, 126) and an access point interface (130, 131), **characterized in that** the security module (140) is arranged to receive clear data that has been input via the clear data interface (121, 122, 124, 125, 126) of the stationary communications unit (120) from the stationary communications unit (120), encrypt the clear data and output the clear data back as encrypted data to the stationary communications unit (120).

2. The security module (140) as claimed in claim 1, wherein the user interface (141) comprises a graphical user interface.

3. The security module (140) as claimed in claim 1 or 2, wherein the security module (140) comprises encryption/decryption key management functions adapted to be presented to a user via the user interface (141).

4. The security module (140) as claimed in any one of claims 1-3, wherein the security module (140) is approved for communication of classified information by a national security authority.

5. The security module (140) as claimed in any one of claims 1-4, wherein the security module (140) comprises means for wireless communication of encrypted data.

6. The security module (140) as claimed in any one of claims 1-5, wherein the security module (140) is adapted to enable the stationary communications unit (120) to interact with a user using the user interface (141) of the security module (140).

7. A stationary communications unit (120) for interaction with the security module of any one of claims 1-6 comprising
a clear data interface (121, 122, 124, 125, 126) adapted for receiving and/or delivering data from/to an external device or user;
an access point interface (130, 131) adapted for connecting the stationary communications unit (120) to a communications channel or network; and
a security module interface (128) for enabling data transfer between a security module (140) detachable from the stationary communications unit (120) and the stationary communications unit (120),
the stationary communications unit (120) being adapted to interact with a user using a user interface (141) of the detachable security module (140), **characterized in that** the stationary communications unit (120) is arranged to deliver clear data that has been input via the clear data interface (121, 122, 124, 125, 126) to the security module (140) and receive the clear data back from the security module (140) as encrypted data.

8. The stationary communications unit (120) as claimed in claim 7, wherein the stationary communications unit (120) is adapted to be automatically activated for communication when the security module (140) is brought in contact with the security module interface (128).

9. The stationary communications unit (120) as claimed in any one of claims 7-8, wherein the stationary communications unit (120) comprises features (121, 122) as of a conventional desktop telephone.

10. The stationary communications unit (120) as claimed in any one of claims 7-9, wherein the stationary communications unit (120) has at least two, and preferably at least five clear data interfaces (121, 122, 124, 125, 126) each being adapted to input and/or output different types of clear data.

11. The stationary communications unit (120) as claimed in any one of claims 7-10, wherein the stationary communications unit (120) has at least two access point interfaces (130, 131) adapted for providing connections to different communications channels or networks.

12. A secure communications system (100, 200) comprising a security module (140) according to any one of claims 1-6 and a stationary communications unit (120) according to any one of claims 7-11.

## Patentansprüche

1. Sicherheitsmodul (140), das von einer stationären Kommunikationseinheit (120) abgenommen werden kann, wobei das Sicherheitsmodul Folgendes aufweist:
ein Verschlüsselungsmittel (160) zum Verschlüsseln und Entschlüsseln von Daten;
ein Datenkommunikationsmittel (143), das dafür ausgelegt ist, verschlüsselte Daten von der stationären Kommunikationseinheit (120) zu empfangen und entschlüsselte Daten an die stationäre Kommunikationseinheit (120) auszugeben und/oder unverschlüsselte Daten von der stationären Kommunikationseinheit (120) zu empfangen und verschlüsselte Daten an die stationäre Kommunikationseinheit (120) auszugeben;
eine Benutzerschnittstelle (141); und
eine Zugangspunktschnittstelle (143), die dafür ausgelegt ist, das Sicherheitsmodul (140) mit einem externen Kommunikationskanal oder Netzwerk zu verbinden;
wobei das Sicherheitsmodul (140) sowohl als eine selbstständige sichere mobile Kommunikationseinheit (140) verwendet werden kann, wenn es von der stationären Kommunikationseinheit (120) abgenommen ist, als auch als ein Sicherheitsmodul (140) zur Verschlüsselung / Entschlüsselung verwendet werden kann, wenn es mit der stationären Kommunikationseinheit (120) verbunden ist, wobei die stationäre Kommunikationseinheit (120) mit einer Schnittstelle für unverschlüsselte Daten (121, 122, 124, 125, 126) und einer Zugangspunktschnittstelle (130, 131) versehen ist, **dadurch gekennzeichnet, dass** das Sicherheitsmodul (140) dafür konfiguriert ist, unverschlüsselte Daten, die über die Schnittstelle für unverschlüsselte Daten (121, 122, 124, 125, 126) der stationären Kommunikationseinheit (120) eingegeben wurden, von der stationären Kommunikationseinheit (120) zu empfangen, die unverschlüsselten Daten zu verschlüsseln und die unverschlüsselten Daten als verschlüsselte Daten zurück an die stationäre Kommunikationseinheit (120) auszugeben.

2. Sicherheitsmodul (140) nach Anspruch 1, wobei die Benutzerschnittstelle (141) eine grafische Benutzerschnittstelle aufweist.

3. Sicherheitsmodul (140) nach Anspruch 1 oder 2, wobei das Sicherheitsmodul (140) Verschlüsselungs-/Entschlüsselungsschlüsselverwaltungsfunktionen aufweist, die dafür ausgelegt sind, einem Nutzer über die Benutzerschnittstelle (141) dargeboten zu werden.

4. Sicherheitsmodul (140) nach einem der Ansprüche 1-3, wobei das Sicherheitsmodul (140) für die Übermittlung geheimer Informationen durch eine nationale Sicherheitsbehörde zugelassen ist.

5. Sicherheitsmodul (140) nach einem der Ansprüche 1-4, wobei das Sicherheitsmodul (140) Mittel zur drahtlosen Übermittlung verschlüsselter Daten aufweist.

6. Sicherheitsmodul (140) nach einem der Ansprüche 1-5, wobei das Sicherheitsmodul (140) dafiir ausgelegt ist, es der stationären Kommunikationseinheit (120) zu ermöglichen, mit einem Nutzer unter Verwendung der Benutzerschnittstelle (141) des Sicherheitsmoduls (140) zu interagieren.

7. Stationäre Kommunikationseinheit (120) zur Interaktion mit dem Sicherheitsmodul nach einem der Ansprüche 1-6, die Folgendes aufweist:
eine Schnittstelle für unverschlüsselte Daten (121, 122, 124, 125, 126), die dafür ausgelegt ist, Daten von einem externen Gerät oder Nutzer zu empfangen und/oder an ein externes Gerät oder einen Nutzer zu senden;
eine Zugangspunktschnittstelle (130, 131), die dafür ausgelegt ist, die stationäre Kommunikationseinheit (120) mit einem Kommunikationskanal oder Netzwerk zu verbinden; und
eine Sicherheitsmodulschnittstelle (128) zum Ermöglichen einer Datenübertragung zwischen einem Sicherheitsmodul (140), das von der stationären Kommunikationseinheit (120) abgenommen werden kann, und der stationären Kommunikationseinheit (120),
wobei die stationäre Kommunikationseinheit (120) dafür ausgelegt ist, mit einem Nutzer unter Verwendung einer Benutzerschnittstelle (141) des abnehmbaren Sicherheitsmoduls (140) zu interagieren,
**dadurch gekennzeichnet, dass** die stationäre Kommunikationseinheit (120) dafür konfiguriert ist, unverschlüsselte Daten, die über die Schnittstelle für unverschlüsselte Daten (121, 122, 124, 125, 126) eingegeben wurden, an das Sicherheitsmodul (140) auszugeben und die unverschlüsselten Daten von dem Sicherheitsmodul (140) als verschlüsselte Daten zurück zu erhalten.

8. Stationäre Kommunikationseinheit (120) nach Anspruch 7, wobei die stationäre Kommunikationseinheit (120) dafür ausgelegt ist, automatisch für eine Kommunikation aktiviert zu werden, wenn das Sicherheitsmodul (140) mit der Sicherheitsmodulschnittstelle (128) in Kontakt gebracht wird.

9. Stationäre Kommunikationseinheit (120) nach einem der Ansprüche 7-8, wobei die stationäre Kommunikationseinheit (120) Funktionsmerkmale (121, 122) wie ein herkömmliches Tischtelefon aufweist.

10. Stationäre Kommunikationseinheit (120) nach einem der Ansprüche 7-9, wobei die stationäre Kommunikationseinheit (120) mindestens zwei und bevorzugt mindestens fünf Schnittstellen für unverschlüsselte Daten (121, 122, 124, 125, 126) aufweist, die jeweils dafür ausgelegt sind, unterschiedliche Arten unverschlüsselter Daten einzugeben und/oder auszugeben.

11. Stationäre Kommunikationseinheit (120) nach einem der Ansprüche 7-10, wobei die stationäre Kommunikationseinheit (120) mindestens zwei Zugangspunktschnittstellen (130, 131) aufweist, die dafür ausgelegt sind, Verbindungen zu unterschiedlichen Kommunikationskanälen oder Netzwerken herzustellen.

12. Sicheres Kommunikationssystem (100, 200), das ein Sicherheitsmodul (140) nach einem der Ansprüche 1-6 und eine stationäre Kommunikationseinheit (120) nach einem der Ansprüche 7-11 aufweist.

## Revendications

1. Module de sécurité (140) détachable d'une unité de communications stationnaire (120), ledit module de sécurité comprenant
des moyens de chiffrement (160) pour chiffrer et déchiffrer des données ;
des moyens de communication de données (143) adaptés pour recevoir des données chiffrées et remettre des données déchiffrées, et/ou recevoir des données en clair et remettre des données chiffrées de/à l'unité de communications stationnaire (120) ;
une interface utilisateur (141) ; et
une interface de point d'accès (143) adaptée pour connecter le module de sécurité (140) à une voie ou un réseau de communications externe ;
le module de sécurité (140) étant utilisable à la fois comme une unité de communications mobile sécurisée autonome (140) lorsqu'il est détaché de l'unité de communications stationnaire (120) et comme un module de sécurité (140) pour le chiffrement/déchiffrement lorsqu'il est connecté à l'unité de communications stationnaire (120), ladite unité de communications stationnaire (120) étant pourvue d'une interface de données en clair (121, 122, 124, 125, 126) et d'une interface de point d'accès (130, 131), **caractérisé en ce que** le module de sécurité (140) est agencé pour recevoir des données en clair qui ont été entrées par l'intermédiaire de l'interface de données en clair (121, 122, 124, 125, 126) de l'unité de communications stationnaire (120) en provenance de l'unité de communications stationnaire (120), chiffrer les données en clair et ressortir les données en clair comme données chiffrées vers l'unité de communications stationnaire (120).

2. Module de sécurité (140) selon la revendication 1, dans lequel l'interface utilisateur (141) comprend une interface utilisateur graphique.

3. Module de sécurité (140) selon la revendication 1 ou 2, dans lequel le module de sécurité (140) comprend des fonctions de gestion de clés de chiffrement/déchiffrement adaptées pour être présentées à un utilisateur par l'intermédiaire de l'interface utilisateur (141).

4. Module de sécurité (140) selon l'une quelconque des revendications 1 à 3, dans lequel le module de sécurité (140) est agréé pour la communication d'informations classifiées par une autorité nationale de sécurité.

5. Module de sécurité (140) selon l'une quelconque des revendications 1 à 4, dans lequel le module de sécurité (140) comprend des moyens pour la communication sans fil de données chiffrées.

6. Module de sécurité (140) selon l'une quelconque des revendications 1 à 5, dans lequel le module de sécurité (140) est adapté pour permettre à l'unité de communications stationnaire (120) d'interagir avec un utilisateur utilisant l'interface utilisateur (141) du module de sécurité (140).

7. Unité de communications stationnaire (120) pour l'interaction avec le module de sécurité de l'une quelconque des revendications 1 à 6 comprenant
une interface de données en clair (121, 122, 124, 125, 126) adaptée pour recevoir et/ou remettre des données de/à un dispositif externe ou utilisateur ;
une interface de point d'accès (130, 131) adaptée pour connecter l'unité de communications stationnaire (120) à une voie ou un réseau de communications ; et
une interface de module de sécurité (128) pour permettre le transfert de données entre un module de sécurité (140) détachable de l'unité de communications stationnaire (120) et l'unité de communications stationnaire (120),
l'unité de communications stationnaire (120) étant adaptée pour interagir avec un utilisateur utilisant une interface utilisateur (141) du module de sécurité détachable (140),
**caractérisée en ce que** l'unité de communications stationnaire (120) est agencée pour remettre des données en clair qui ont été entrées par l'intermédiaire de l'interface de données en clair (121, 122, 124, 125, 126) au module de sécurité (140) et recevoir les données en clair en retour en provenance du module de sécurité (140) comme données chiffrées.

8. Unité de communications stationnaire (120) selon la revendication 7, dans laquelle l'unité de communications stationnaire (120) est adaptée pour être activée automatiquement pour la communication lorsque le module de sécurité (140) est amené en contact avec l'interface de module de sécurité (128).

9. Unité de communications stationnaire (120) selon l'une quelconque des revendications 7 à 8, dans laquelle l'unité de communications stationnaire (120) comprend des fonctions (121, 122) comme celles d'un téléphone de bureau traditionnel.

10. Unité de communications stationnaire (120) selon l'une quelconque des revendications 7 à 9, dans laquelle l'unité de communications stationnaire (120) a au moins deux, et de préférence au moins cinq interfaces de données en clair (121, 122, 124, 125, 126) chacune étant adaptée pour entrer et/ou sortir différents types de données en clair.

11. Unité de communications stationnaire (120) selon l'une quelconque des revendications 7 à 10, dans laquelle l'unité de communications stationnaire (120) a au moins deux interfaces de points d'accès (130, 131) adaptées pour fournir des connexions à des voies ou réseaux de communications différents.

12. Système de communications sécurisé (100, 200) comprenant un module de sécurité (140) selon l'une quelconque des revendications 1 à 6 et une unité de communications stationnaire (120) selon l'une quelconque des revendications 7 à 11.
